# EUROPEAN PATENT SPECIFICATION

(11) **EP 0 938 815 B1**
(45) Date of publication and mention of the grant of the patent: **02.08.2006**
(21) Application number: 97948336.9
(22) Date of filing: 14.11.1997
(51) Int. Cl.: H04N 7/00, H04N 7/173

(54) **METHOD AND APPARATUS FOR LOCATING A PROGRAM IN AN ELECTRONIC PROGRAM GUIDE**
VERFAHREN UND VORRICHTUNG ZUR LOKALISIERUNG EINER SENDUNG IN EINEM ELEKTRONISCHEN PROGRAMMFÜHRER
PROCEDE ET APPAREIL PERMETTANT DE REPERER UN PROGRAMME DANS UN GUIDE DE PROGRAMMATION ELECTRONIQUE

(30) Priority: 15.11.1996 US 751538
(43) Date of publication of application: 01.09.1999
(73) Proprietor: Mindport B.V., 2130 KA Hoofddorp (NL)
(72) Inventor: BEDARD, Karen, San Jose, CA 95124 (US)
(74) Representative: de Vries, Johannes Hendrik Fokke
(86) International application number: PCT/US1997/020996
(87) International publication number: WO 1998/021878

(56) References cited:
- EP-A2- 0 735 749
- WO-A1-96/17473
- WO-A1-96/31980
- US-A- 5 523 796
- US-A- 5 526 034
- US-A- 5 629 733

## Description

### BACKGROUND OF THE INVENTION

### Technical Field

The present invention relates to the location and presentation of television programs and television program guide information to a television viewer. More particularly, the present invention relates to a method and apparatus for locating a television program listed in an Electronic Programming Guide.

### Discussion of the Related Art

Television viewing is a popular activity, and the number of available television channels has grown substantially since the early days of broadcast television, thereby providing viewers with greatly increased choices in programming. Programming guides have become important viewer tools, and indeed, are essential for efficiently locating desired programs.

Paper guides, such as those provided with newspapers, are plentiful but suffer from many drawbacks. These drawbacks include possible preemption after printing and the sheer amount of information placed before the reader with little, if any, visual distinction between programs. A reader interested in only a subset of the available programming is forced to search the entire listing to locate the desired program or programs.

More recent alternatives to paper guides, known as Electronic Program Guides ("EPG"), have been developed. EPGs provide television program listings directly on the viewer's television screen, and generally eliminate the possibility of relying on an obsolete guide as the program listings can be updated in real-time by the EPG provider. U.S. Patent No. 5,353,121 issued Oct. 4, 1994 to Young discloses just such an EPG, wherein information is displayed on the viewer's television screen.

These known EPGs not only provide on-screen program listings, but also allow a viewer to tune to a desired program, if such program is listed in the program guide, by interacting with the EPG via a remote control instead of manually changing channels. EPGs typically present the television listings in a grid format and give the viewer control over a cursor or pointer with which to make selections. The grid may be organized in such a manner that one axis represents time and the other represents programming channels. Such grids typically present the program channels in a sequential manner such as numeric order by channel number or alphabetic order by programming source or other identifier.

WO 96/17473 describes various components of an electronic program schedule system. Physically, these system components can be located in a user's set-top cable converter box or other signal reception or processing devices, such as a satellite receiver. An input signal is connected to a receiver which receives a transmitted data stream from a data provider. The data stream may contain information about programs or services available in a particular market. Using a remote controller, a user can enter a MENU mode. The operation of a "By Title" display option permits the user to input a string of characters representative of a program title or beginning portion thereof and search the program listings for the desired title. In systems having a large database of program schedule information, it may be desirable to utilize only a subset of the total listings database for display in the "By Title" mode to reduce the time required to search the listings. For example, in the particular embodiment shown, only programs scheduled for the present day or the following day are displayed.

US-A-5 526 034 discloses a head-end in communication with a plurality of nodes that in turn communicate with set top units, referred to as home interface controllers. Each of these home interface controllers has a remote control operable by the user. Each head-end may obtain items for use in providing an information service from a regional processing centre. Information services that are conventional television network programming may also be distributed from the national and regional processing centres. A carousel menu system provides interaction with the user. A "Smart TV" selection permits the subscriber to search for programs or other information service offerings. The carousel choices permit the subscriber to find programs and movies by subject, by show or by actor.

Although known EPGs grant viewers the convenience of identifying available television programs without resorting to other less attractive sources of information, shortcomings still exist. For example, a viewer who greatly prefers sports programs over other programming will still have to search the entire grid of available programs to find those involving sporting events of interest. Further, when a viewer knows that a certain program is currently scheduled, or is scheduled sometime in the future, but does not recall the station or starting time of the program, the viewer must search the entire television program guide listing to locate the same.

### SUMMARY OF THE INVENTION

The present invention addresses the above disadvantages by providing a method, apparatus and computer-readable medium according to claims 1, 4 and 7, respectively.

In accordance with the preferred embodiments, a method and apparatus is provided for searching television program guide listings. This method and apparatus may be used to locate a particular program or to locate programs falling into particular categories (e.g., movies, sports, and news) or subcategories of television programming. In an exemplary embodiment of the present invention, an apparatus for locating television programming is provided which includes a means for acquiring television program scheduling information and for receiving user input specifying a television program title or category of interest. The apparatus further includes a means for searching the received television program scheduling information for the designated television program title or category of interest and for displaying information on television programs from the television schedule information with titles, or in categories, that match the television program title or category of interest.

### BRIEF DESCRIPTION OF THE DRAWINGS

The features and advantages of the present invention will be better understood by reference to the following detailed description, which should be read in conjunction with the accompanying drawings in which:
FIG. 1A is an Electronic Program Mini-Guide, with a primary television program displayed in the background;
FIG. 1B is an Electronic Program Mini-Guide, as in FIG. 1A, with a program finder option selected;
FIG. 2 discloses an exemplary embodiment of a program finder, with a primary television program displayed in the background; and
FIGS. 3A and 3B disclose an exemplary embodiment of an Electronic Program Guide displaying programming information that matches a viewer's search criteria.

### DETAILED DESCRIPTION OF THE INVENTION

The following embodiments of the present invention will be described in the context of Electronic Program Guides ("EPG") and general television viewing, although those skilled in the art will recognize that the disclosed methods and structures are readily adaptable for broader application. Note that whenever the same reference numeral is repeated with respect to different figures, it refers to the corresponding structure in each such figure.

A television viewing environment typically incorporates a television, a viewer interface, a viewer interface remote control, and one or more viewers. Viewer interfaces are known in the art, and are commonly found in the form of a television set-top unit. The viewer interface is often connected to, and between, the television and various television program/broadcast sources such as cable and satellite. The viewer interface receives input, such as television programs and television program guide information, from the broadcast sources and supplies this information to the television. The viewer interface may also perform additional functions such as decoding and encoding of the television programming, and generally includes a means for accepting viewer commands, such as to change television channels, from a remote control.

For the purpose of describing the present invention, the viewer interface additionally includes an EPG. However, one skilled in the art will understand that an EPG could be implemented in a variety of ways, including within the television or as part of an interactive television network coupled to the viewer interface. An example of a suitable EPG is disclosed in U.S. -A-5 793 438, entitled "Electronic Program Guide with Enhanced Presentation", which claims priority of November 13, 1995.

In accordance with the present invention, a program finder that operates in conjunction with an EPG is provided for use in the above-described television viewing environment. Drawing upon program guide information available through the EPG, the program finder may be instructed to search through the program guide information to locate specific programs, or categories (e.g., movies, sports, and news) and subcategories of programs, that are of interest. The program finder may be implemented in software and, like the EPG, downloaded into the viewer interface via an interactive television network or other means for loading software. The program finder may also be implemented as resident software in the viewer interface.

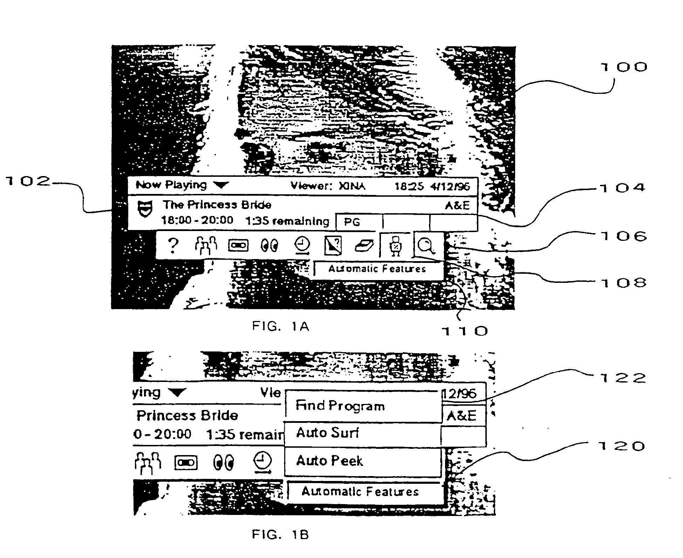

Turning now to the figures, FIG. 1A discloses a mini-guide program display 102 of an Electronic Program Guide overlaying a primary television display 100. Mini-guide display 102 comprises an event description area 104 and options bar 106.

While mini-guide display 102 is displayed over primary television display 100, an option from options bar 106 may be selected by the viewer using, for example, a remote control, with text box 110 identifying the selected option. When option 108 is selected from options bar 106, as shown in FIGS. 1A and 1B, automatic features of the EPG may be utilized. FIG. 1B discloses an illustrative list 120 of automatic features available to a viewer, and in an exemplary embodiment of the invention, a program finder option 122 is one such feature.

Although FIGS. 1A and 1B disclose one method of accessing a program finder option 122, one skilled in the art will recognize that numerous methods of activation, such as a direct command from the viewer interface remote control, are possible without exceeding the scope of the invention.

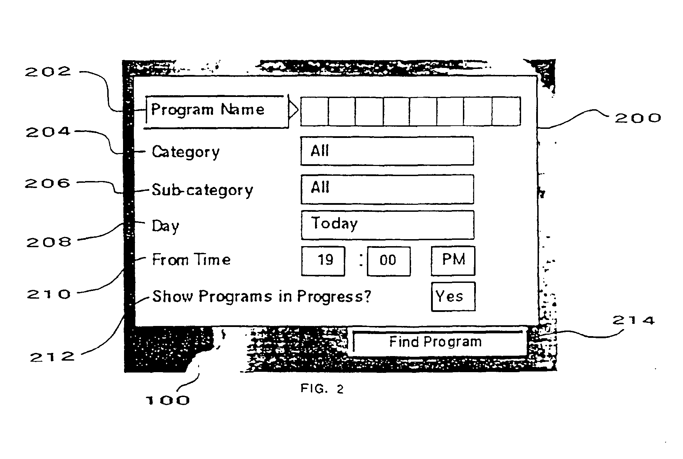

FIG. 2 discloses a program finder user interface 200 overlaying primary television display 100. User interface 200 is displayed over television display 100 upon selection of program finder option 122, and is used by a viewer to specify the viewer's program search criteria. Program name field 202 displays the characters to be used in searching for a specific television program. The characters for program name field 202 are input by a viewer through the viewer interface remote control, and may be limited to a particular number such as eight.

Category field 204 is used to specify a category or categories of programming, such as movies, sports, or news, that are to be searched for. Category field 204 expands (not shown), when selected, to display available categories and allow a viewer to select a category of programming for which to search. In one embodiment of the invention, a default choice of all categories is shown when program finder interface 200 is initially displayed, but can be subsequently modified by the viewer.

Subcategory field 206 is used to refine a category-type search for programming. For example, within a movies category, there may be subcategories of adventure, comedy, science fiction, etc. Subcategory field 206 also expands (not shown) when selected, to display available subcategories and allow a viewer to specify at least one subcategory. In one embodiment of the invention, a default choice of all subcategories is selected when program finder interface 200 is initially displayed, but can be subsequently modified by the viewer.

Day field 208 is used to choose the day or days of the programming guide listing in which to search for viewer-specified programming. Illustrative examples of possible choices include the present day, a specific day of the week, or any day. If a specific day of the week is chosen, including the present day, only that particular day is searched for the desired programming. If "any day" is chosen, all days for which programming information is available is searched. In one embodiment of the present invention, a default choice of the present day is automatically selected when program finder interface 200 is initially displayed, but can be changed by the viewer.

The programming days that can be searched will be limited to the amount of programming information that has been downloaded to the EPG. Therefore, the program finder will only search the days for which programming guide information is available and that meet the viewer's day field 208 parameter.

Time field 210 is used to specify the programming time within the selected day or days from which to commence the search. The program finder will only search the programming listing starting at the specified time and continue to the end of the day. In an alternative embodiment, if "any day" is chosen for day field 208, the viewer will not be allowed to set a time in time field 210, as the ability to search after a certain time for "all days" would provide a benefit to the viewer in only the rarest of instances. Time field 210 will be automatically set to the current time when program finder interface 200 is displayed, but can be changed by the viewer.

A "show programs in progress" option 212 allows the viewer to specify whether programs that are currently being broadcast or displayed should be searched and identified. If option 212 is set to "no", then the program finder will only return programming guide information concerning programs that meet the viewer's specified criteria and that have not yet started. Alternatively, if option 212 is set to "yes", then the program finder will also return programming guide information that meet the viewer's specified criteria and that have already started.

When the viewer has finished selecting search criteria, find program button 214 is selected to initiate the search. Based on the specified criteria, the program finder will search the available program guide information for matching television programming. Certain techniques may be employed to ensure the accuracy of the search results. For example, the program finder can use "fuzzy" search logic to locate matches. If such a technique is implemented, slight misspellings -- whether in program name field 202 or in the program guide information itself -- will still result in a match.

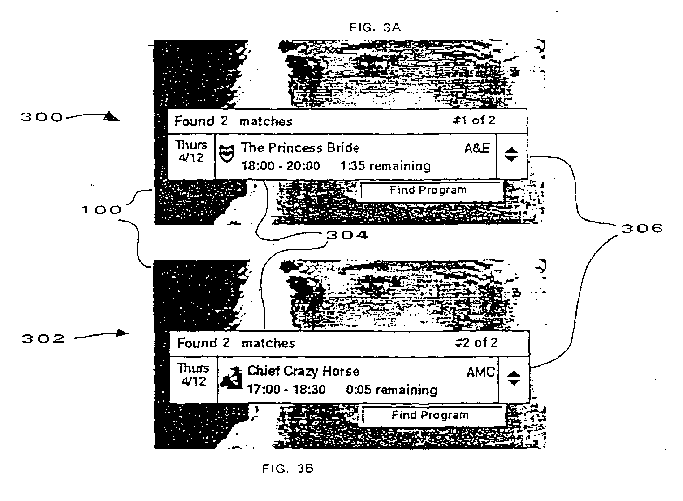

FIGS. 3A and 3B illustrate an example of the results of a program finder search. A first display 300 and a second display 302 depict a primary television display 100 overlaid with a result box 304 displaying information concerning programs that match the viewer's selected search criteria. When more than one matching program is located by the program finder, result box 304 includes a scroll button 306 with which the viewer may scroll through information on the matching programs.

Various embodiments of the invention have been described. The descriptions are offered by way of illustration, not limitation. Thus, it will be apparent to those skilled in the art that modifications may be made to the invention as described without departing from the scope of the claims set out below.

## Claims

1. Method of locating desired television programs, comprising the steps of:
acquiring television program scheduling information; receiving user input specifying a television program title of interest;
searching said television program scheduling information for said television program title of interest; and
displaying information on television programs from said television program schedule information with titles that match said television program title of interest, wherein said step of displaying further comprises the step of:
displaying information on television programs from said television program schedule information with titles that match said television program title of interest only if said television programs are scheduled within predetermined time constraints,
**characterised by** searching the television program scheduling information based on criteria specified by the user, including a dayfield parameter used to choose the day or days of the program listing in which to search for viewer-specified programming.

2. Method according to claim 1, wherein a possible choice of dayfield parameter includes a specific day of the week, wherein, if a specific day of the week is chosen, only that particular day is searched for the desired programming.

3. Method according to claim 1, wherein
an option is provided allowing a viewer to specify whether programs that are currently being broadcast or displayed should be searched and identified, wherein, if the option is set to "no" only programming guide information is returned concerning programs that have not yet started, and, if the option is set to "yes", also programming guide information.that meet the specified criteria and concern programs that have already started is returned.

4. Apparatus for locating television programming, comprising:
means for acquiring television program scheduling information;
means for receiving user input specifying a television programming title of interest;
means for searching said television program scheduling information for said television program title of interest; and
means for displaying information on television programs from said television schedule information with titles that match said television program title of interest, wherein said displaying means further comprises:
means for displaying information on television programs from said television program schedule information with titles that match said television program title of interest only if said television programs are scheduled within predetermined time constraints, **characterised in that**
the means for searching include a program finder arranged to search the television program scheduling information based on criteria specified by the user, including a dayfield parameter used to choose the day or days of the program listing in which to search for viewer-specified programming.

5. Apparatus according to claim 4, wherein a possible choice of dayfield parameter includes a specific day of the week, wherein, if a specific day of the week is chosen, only that particular day is searched for the desired programming.

6. Apparatus according to claim 4, **characterised by** comprising an option allowing a viewer to specify whether programs that are currently being broadcast or displayed should be searched and identified, wherein, if the option is set to "no" only programming guide information is returned concerning programs that have not yet started, and, if the option is set to "yes", also programming guide information that meet the specified criteria and concern programs that have already started is returned.

7. Computer-readable medium which can be used to direct a computer to locate television programming, comprising:
means for directing the computer to acquire television program scheduling information;
means for directing the computer to receive user input specifying a television program title of interest;
means for directing the computer to search said television program scheduling information for said television program title of interest; and
means for directing the computer to display information on television programs from said television program schedule information with titles that match said television program title of interest, only if said television programs are scheduled within predetermined time constraints, **characterised by** means for directing the computer to search the television program scheduling information based on criteria specified by the user, including a dayfield parameter used to choose the day or days of the program listing in which to search for viewer-specified programming.

8. Computer-readable medium according to claim 7, wherein a possible choice of dayfield parameter includes a specific day of the week, wherein, if a specific day of the week is chosen, the means direct the computer to search only that particular day for the desired programming.

9. Computer-readable medium according to claim 7, **characterised in that** said means for directing the computer further comprise means for directing the computer to provide an option allowing a viewer to specify whether programs that are currently being broadcast or displayed should be searched and identified, wherein, if the option is set to "no" only programming guide information is returned concerning programs that have not yet started, and, if the option is set to "yes", also programming guide information that meet the specified criteria and concern programs that have already started is returned.

## Patentansprüche

1. Verfahren zur Lokalisierung von erwünschten Femsehprogrammen, welches die Schritte umfasst:
Erfassen einer Femsehprogrammverzeichnis-Information; Empfangen einer Benutzereingabe, welche einen Femsehprogrammtitel von Interesse im Einzelnen bezeichnet;
Durchsuchen der Femsehprogrammverzeichnis-Information nach dem Femsehprogrammtitel von Interesse; und
Anzeigen von Information bezüglich Fernsehprogrammen aus der Femsehprogrammverzeichnis-Information mit Titeln, welche mit dem Femsehprogrammtitel von Interesse übereinstimmen, wobei der Schritt des Anzeigens femer folgenden Schritt umfasst:
Anzeigen von Information bezüglich Femsehprogrammen aus der Femsehprogrammverzeichnis-Information mit Titeln, welche mit dem Femsehprogrammtitel von Interesse übereinstimmen nur, wenn die Femsehprogramme innerhalb vorgegebener Zeitbegrenzungen zeitlich richtig liegen,
**gekennzeichnet durch** ein Durchsuchen der Femsehprogrammverzeichnis-Information basierend auf Gesichtspunkten, die **durch** den Benutzer im Einzelnen bezeichnet werden unter Einschluss eines Tagesdatumsfeld-Parameters, der verwendet wird, um den Tag oder die Tage der Programmaufstellung zu wählen, an denen nach dem zuschauerspezfizierten Programm gesucht werden soll.

2. Verfahren nach Anspruch 1, wobei eine mögliche Auswahl des Tagesdatumsfeld-Parameters einen speziellen Tag der Woche einschließt, wobei, wenn ein spezieller Tag der Woche gewählt wird nur dieser spezielle Tag nach dem erwünschten Programm abgesucht wird.

3. Verfahren nach Anspruch 1, wobei eine Wahlmöglichkeit geliefert wird, welche es einem Zuschauer erlaubt zu spezifizieren, ob Programme, die aktuell gesendet oder angezeigt werden gesucht und identifiziert werden sollten, wobei, wenn die Wahlmöglichkeit auf " Nein " gesetzt wird nur eine Programmführungsinformation wiedergegeben wird, die Programme betrifft, die noch nicht gestartet sind und dass, wenn die Wahlmöglichkeit auf " Ja " gesetzt wird auch eine Programmführungsinformation wiedergegeben wird, welche die spezifizierten Eigenschaften erfüllt und Programme betrifft, die schon gestartet wurden.

4. Einrichtung zur Lokalisierung von Femsehprogrammen, welche umfasst:
Einrichtung zum Erfassen einer Femsehprogrammverzeichnis-Information;
Einrichtung zum Empfang einer Benutzereingabe, welche einen Femsehprogrammtitel von Interesse im Einzelnen bezeichnet;
Einrichtung zum Durchsuchen der Fernsehprogrammverzeichnis-Information nach dem Femsehprogrammtitel von Interesse; und
Einrichtung zum Anzeigen von Information bezüglich Femsehprogrammen aus der Femsehprogrammverzeichnis-Information mit Titeln, welche mit dem Femsehprogrammtitel von Interesse übereinstimmen, wobei die Anzeigeeinrichtung femer umfasst:
Einrichtung zum Anzeigen von Information bezüglich Femsehprogrammen aus der Femsehprogrammverzeichnis-Information mit Titeln, welche mit dem Femsehprogrammtitel von Interesse übereinstimmen nur, wenn die Femsehprogramme innerhalb vorgegebener Zeitbegrenzungen zeitlich richtig liegen, **dadurch gekennzeichnet, dass**
die Einrichtung zum Durchsuchen einen Programmsucher einschließt, der eingerichtet ist, um die Femsehprogrammverzeichnis-Information basierend auf Gesichtspunkten, die durch den Benutzer im Einzelnen bezeichnet werden einschließlich eines Tagesdatumsfeld-Parameters, der verwendet wird, um den Tag oder die Tage der Programmaufstellung zu wählen, an denen nach dem zuschauerspezfizierten Programm gesucht werden soll zu suchen.

5. Einrichtung nach Anspruch 4, wobei eine mögliche Auswahl des Tagesdatumsfeld-Parameters einen speziellen Wochentag einschließt, wobei, wenn ein spezieller Wochentag ausgewählt wird nur dieser spezielle Tag nach dem gewünschten Programm abgesucht wird.

6. Einrichtung nach Anspruch 4, **dadurch gekennzeichnet, dass** sie eine Wahlmöglichkeit umfasst, welche es einem Zuschauer erlaubt zu spezfizieren, ob Programme, die aktuell gesendet oder angezeigt werden gesucht und identifiziert werden sollten, wobei, wenn die Wahlmöglichkeit auf " Nein " gesetzt wird nur eine Programmführungsinformation wiedergegeben wird, die Programme betrifft, die noch nicht gestartet sind und dass, wenn die Wahlmöglichkeit auf " Ja " gesetzt wird auch eine Programmführungsinformation wiedergegeben wird, welche die spezifizierten Eigenschaften erfüllt und Programme betrifft, die schon gestartet wurden.

7. Computerlesbares Medium, das verwendet werden kann, um einem Computer anzuweisen ein Femsehprogramm zu lokalisieren, welches umfasst:
Einrichtung zur Anweisung des Computers, die Femsehprogrammverzeichnis-Information zu erfassen;
Einrichtung zur Anweisung des Computers, eine Benutzereingabe zu empfangen, welche den Femsehprogrammtitel von Interesse im Einzelnen bezeichnet;
Einrichtung zur Anweisung des Computers, die Femsehprogrammverzeichnis-Information nach dem Femsehprogrammtitel von Interesse zu durchsuchen; und
Einrichtung zur Anweisung des Computers, Information anzuzeigen bezüglich Femsehprogrammen aus der Femsehprogrammverzeichnis-Information mit Titeln, welche mit dem Femsehprogrammtitel von Interesse übereinstimmen nur, wenn die Femsehprogramme innerhalb vorgegebener Zeitbegrenzungen zeitlich richtig liegen, **gekennzeichnet, durch** eine Einrichtung zur Anweisung des Computers, die Femsehprogrammverzeichnis-Information zu durchsuchen basierend auf Gesichtspunkten, die durch den Benutzer im Einzelnen bezeichnet werden unter Einschluss eines Tagesdatumsfeld-Parameters, der verwendet wird, um den Tag oder die Tage der Programmaufstellung zu wählen, an denen nach dem zuschauerspezfizierten Programm gesucht werden soll.

8. Computerlesbares Medium nach Anspruch 7, wobei eine mögliche Auswahl des Tagesdatumsfeld-Parameters einen speziellen Wochentag einschließt, wobei, wenn ein spezieller Wochentag ausgewählt wird die Einrichtung den Computer anweist nur diesen speziellen Tag nach dem gewünschten Programm abzusuchen.

9. Computerlesbares Medium nach Anspruch 7, **dadurch gekennzeichnet, dass** die Einrichtung zur Anweisung des Computers ferner eine Einrichtung zur Anweisung des Computers umfasst, um eine Wahlmöglichkeit zu liefern, welche es einem Zuschauer erlaubt zu spezifizieren, ob Programme, die aktuell gesendet oder angezeigt werden gesucht und identifiziert werden sollten, wobei, wenn die Wahlmöglichkeit auf " Nein " gesetzt wird nur eine Programmführungsinformation wiedergegeben wird, die Programme betrifft, die noch nicht gestartet sind und dass, wenn die Wahlmöglichkeit auf " Ja " gesetzt wird auch eine Programmführungsinformation wiedergegeben wird, welche die spezifizierten Eigenschaften erfüllt und Programme betrifft, die schon gestartet wurden.

## Revendications

1. Procédé de localisation de programmes de télévision voulus, comprenant les étapes de :
acquisition d'informations de programmation de programme de télévision ; réception d'une entrée d'utilisateur spécifiant un titre de programme de télévision d'intérêt ;
recherche desdites informations de programmation de programme de télévision pour ledit titre de programme de télévision d'intérêt ; et
affichage d'informations sur des programmes de télévision à partir desdites informations de programmation de programme de télévision avec des titres qui correspondent audit titre de programme de télévision d'intérêt, dans lequel ladite étape d'affichage comprend en outre les étapes de :
affichage d'informations sur des programmes de télévision à partir desdites informations de programmation de programme de télévision avec des titres qui correspondent audit titre de programme de télévision d'intérêt seulement si lesdits programmes de télévision sont programmés dans des contraintes de temps prédéterminées,
**caractérisé par** la recherche des informations de programmation de programme de télévision sur la base de critères spécifiés par l'utilisateur, comprenant un paramètre de champ de jour utilisé pour choisir le jour ou les jours de la liste de programme dans laquelle rechercher la programmation spécifiée par le spectateur.

2. Procédé selon la revendication 1, dans lequel un choix possible de paramètre de champ de jour comprend un jour spécifique de la semaine, dans lequel, si un jour spécifique de la semaine est choisi, on ne recherche que dans ce jour particulier la programmation voulue.

3. Procédé selon la revendication 1, dans lequel
une option est fournie permettant à un spectateur de spécifier si des programmes qui sont actuellement diffusés ou affichés devraient être recherchés et identifiés, dans laquelle, si l'option est réglée à "non", seules les informations de guide de programmation sont retournées concernant des programmes qui n'ont pas encore été commencés, et, si l'option est réglée à "oui", des informations de guide de programmation qui satisfont les critères spécifiés et concernent des programmes qui ont déjà été commencés sont retournées.

4. Appareil de localisation d'une programmation de télévision, comprenant :
un moyen pour acquérir des informations de programmation de programme de télévision ;
un moyen pour recevoir une entrée d'utilisateur spécifiant un titre de programmation de télévision d'intérêt ;
un moyen pour rechercher lesdites informations de programmation de programme de télévision pour ledit titre de programme de télévision d'intérêt ; et
un moyen pour afficher des informations sur des programmes de télévision à partir desdites informations de programmation de télévision avec des titres qui correspondent audit titre de programme de télévision d'intérêt, dans lequel ledit moyen d'affichage comprend en outre :
un moyen pour afficher des informations sur des programmes de télévision à partir desdites informations de programmation de programme de télévision avec des titres qui correspondent audit titre de programme de télévision d'intérêt seulement si lesdits programmes de télévision sont programmés dans des contraintes de temps prédéterminées, **caractérisé en ce que**
le moyen pour la recherche comprend un moteur de recherche disposé pour rechercher les informations de programmation de programme de télévision sur la base de critères spécifiés par l'utilisateur, comprenant un paramètre de champ de jour utilisé pour choisir le jour ou les jours de la liste de programme dans laquelle rechercher la programmation spécifiée par le spectateur.

5. Appareil selon la revendication 4, dans lequel un choix possible de paramètre de champ de jour comprend un jour spécifique de la semaine, dans lequel, si un jour spécifique de la semaine est choisi, on ne recherche que dans ce jour particulier, la programmation voulue.

6. Appareil selon la revendication 4, **caractérisé en ce qu'**il comprend une option permettant à un spectateur de spécifier si des programmes qui sont actuellement diffusés ou affichés devraient être recherchés et identifiés, dans lesquels, si l'option est réglée à "non", seules des informations de guide de programmation sont retournées concernant des programmes qui n'ont pas été encore commencés, et, si l'option est réglée à "oui", des informations de guide de programmation aussi qui satisfont les critères spécifiés et concernent des programmes qui ont été commencés sont retournées.

7. Support lisible par ordinateur qui peut être utilisé pour diriger un ordinateur pour localiser une programmation de télévision, comprenant :
un moyen pour diriger l'ordinateur pour acquérir des informations de programmation de programme de télévision ;
un moyen pour diriger l'ordinateur pour recevoir une entrée d'utilisateur spécifiant un titre de programme de télévision d'intérêt ;
un moyen pour diriger l'ordinateur pour rechercher lesdites informations de programmation de programme de télévision pour ledit titre de programme de télévision d'intérêt ; et
un moyen pour diriger l'ordinateur pour afficher des informations sur des programmes de télévision à partir desdites informations de programmation de programme de télévision avec des titres qui correspondent audit titre de programme de télévision d'intérêt, seulement si lesdits programmes de télévision sont programmés dans des contraintes de temps prédéterminées, **caractérisé par** des moyens pour diriger l'ordinateur pour rechercher les informations de programmation de programme de télévision sur la base de critères spécifiés par l'utilisateur, comprenant un paramètre de champ de jour utilisé pour choisir le jour ou les jours de la liste de programme dans laquelle rechercher la programmation spécifiée par le spectateur.

8. Support lisible par ordinateur selon la revendication 7, dans lequel un choix possible de paramètre de champ de jour comprend un jour spécifique de la semaine, dans lequel, si un jour spécifique de la semaine est choisi, le moyen dirige l'ordinateur pour ne rechercher que dans ce jour particulier la programmation voulue.

9. Support lisible par ordinateur selon la revendication 7, **caractérisé en ce que** ledit moyen pour diriger l'ordinateur comprend en outre un moyen pour diriger l'ordinateur pour fournir une option permettant à un spectateur de spécifier si des programmes qui sont actuellement diffusés ou affichés devraient être recherchés et identifiés, dans lesquels, si l'option est réglée à "non", seules des informations de guide de programme sont retournées concernant des programmes qui n'ont pas encore été commencés, et, si l'option est réglée à "oui", des informations de guide de programmation aussi qui satisfont les critères spécifiés et concernent des programmes qui ont été déjà commencés sont retournées.
